# EUROPEAN PATENT APPLICATION

(11) **EP 3 561 960 A1**
(43) Date of publication of application: **30.10.2019**
(21) Application number: 18196765.4
(22) Date of filing: 26.09.2018
(51) Int. Cl.: H01R 4/66, H01R 11/14, H01R 13/66

(54) **DEVICE FOR RELEASING CHARGES**

(30) Priority: 25.04.2018 CN 201820601309 U
(71) Applicant: Beijing Apollo Ding Rong Solar Technology Co., Ltd., Beijing 100176 (CN)
(72) Inventor: XU, Yi, Beijing, 100176 (CN)
(74) Representative: Soria Parra, Manuel

(57) **Abstract**

The present invention is directed to a device for releasing charges. The device for releasing charges includes: a connecting rod 101; a handle 102 connected to one end of the connecting rod 101; a discharge head 103 connected to the other end of the connecting rod 101; and a wire 104 having one end electrically connected to a ground point 200 and the other end electrically connected to the discharging head 103. The technical solution can enable the user to safely hold the handle during a charge release operation, flexibly select the charged portion in the chamber and contact the discharge head with the charged portion in the chamber, thereby allowing the conductive portion to be electrically connected to the ground point to realize charge release. It can improve the flexibility and safety of the charge release operation and improve the user experience.

## Description

### TECHNICAL FIELD

The present invention relates to the field of solar cell technology, and more particularly to a device for releasing charges.

### BACKGROUND

With the rapid development of science and technology and the continuous improvement of people's living standards, people begin to pay more attention to environmental issues. At the same time, with the increasing energy required in production and living, new energy sources with less or no pollution to the environment such as solar cell technology have developed rapidly in recent years. Solar cell is a device that directly converts light energy into electrical energy through photoelectric effect or photochemical effect. Among them, solar thin film battery CIGS is the mainstream, and the solar thin film battery has the advantages of small mass, extremely thin thickness and bendability. The output of solar thin film batteries has increased year by year.

A production line for the solar thin film batteries generally includes a chamber with a high voltage, such as an ionization chamber, etc. In order to avoid accidents caused by human touch of various components in the chamber before performing maintenance on the production line for the solar thin film batteries. It is necessary to release charges on the charged portion of the chamber.

In the prior art, a device for releasing charges can be disposed at a position in the chamber where charges are easily accumulated, and when it is necessary to release charges, the device for releasing charges is electrically connected to a ground point through a wire to realize charge release.

### SUMMARY

To overcome the problems in the prior art, embodiments of the present invention provide a device for releasing charges. The technical solution is as follows.

According to the present invention, there is provided a device for releasing charges, including:
a connecting rod;
a handle connected to one end of the connecting rod;
a discharge head connected to the other end of the connecting rod; and
a wire having one end electrically connected to a ground point and the other end electrically connected to the discharge head.

In the device for releasing charges provided by an embodiment of the present invention, a handle is connected to one end of a connecting rod, a discharge head is connected to the other end of the connecting rod. One end of a wire is electrically connected to a ground point outside the device for releasing charges. The other end of the wire is electrically connected to the discharge head. Then, the user can safely hold the handle during the charge release operation, flexibly select a charged portion in the chamber and contact the discharge head with the charged portion in the chamber, to allow the conductive portion to be electrically connected to the ground point to realize charge release. It can improve the flexibility and safety of the charge release operation and improve the user experience.

In an embodiment, the device for releasing charges further includes a voltage display electrically connected to the discharge head by another wire, wherein the voltage display is configured to display a voltage of the discharge head.

In an embodiment, the connecting rod is a telescopic connecting rod.

In an embodiment, the discharge head is a hook of a U-shaped structure.

In an embodiment, the device for releasing charges further includes a hand guard composed of an insulating material, wherein the hand guard is disposed between the handle and the connecting rod.

In an embodiment, the connecting rod includes a connecting rod inner cavity, the handle includes a handle inner cavity, the wire is disposed in the connecting rod inner cavity and in the handle inner cavity, and one end of the wire reaches out from an opening of the handle inner cavity for electrical connection with the ground point.

In an embodiment, a material of the discharge head includes a conductive material including copper and/or silver.

In an embodiment, a material of the handle and the connecting rod includes an insulating material.

In an embodiment, a voltage display is fixed to the connecting rod.

In an embodiment, the discharge head includes both a U-shaped hook head and a straight discharge head.

It should be understood that both the foregoing general description and the following detailed description are exemplary and explanatory only and are not restrictive of the invention.

### BRIEF DESCRIPTION OF THE DRAWINGS

The accompanying drawings herein, which are incorporated in and constitute a part of this specification, illustrate embodiments consistent with the present invention and, together with the description, serve to explain the principles of the present invention.
Fig. 1 is a schematic structural diagram of a device for releasing charges according to an exemplary embodiment;
Fig. 2a is a schematic structural diagram of a device for releasing charges according to an exemplary embodiment;
Fig. 2b is a schematic structural diagram of a device for releasing charges according to an exemplary embodiment;
Fig. 3a is a schematic structural diagram of a device for releasing charges according to an exemplary embodiment;
Fig. 3b is a schematic structural diagram of a device for releasing charges according to an exemplary embodiment;
Fig. 4 is a schematic structural diagram of a device for releasing charges according to an exemplary embodiment; and
Fig. 5 is a cross-sectional view of a device for releasing charges according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

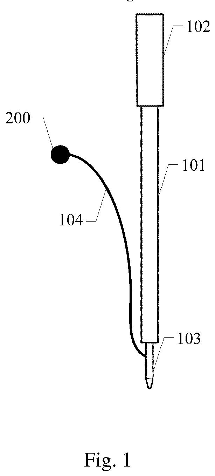

An embodiment of the present invention provides a device for releasing charges. As shown in Fig. 1, the device for releasing charges includes: a connecting rod 101, a handle 102, a discharge head 103, and a wire 104. The handle 102 is connected to one end of the connecting rod 101. The discharge head 103 is connected to the other end of the connecting rod 101. One end of the wire 104 is electrically connected to a ground point 200 outside the device for discharging charges, and the other end of the wire 104 is electrically connected to the discharge head 103.

For example, a material of the handle 102 and the connecting rod 101 can include an insulating material. The insulating material can include fiber products, rubber, plastic, glass, ceramics, articles thereof, and the like.

The material of the discharge head 103 includes a conductive material, and the conductive material includes copper and/or silver. For example, the conductive material is a copper-silver alloy.

The handle 102 can be sleeved at one end of the connecting rod 101, or can be bonded or snapped at one end of the connecting rod 101. The discharge head 103 can be sleeved at the other end of the connecting rod 101, or can be bonded or snapped at the other end of the connecting rod 101.

The connecting rod 101 can be a connecting rod of a specified length or a telescopic connecting rod. The telescopic connecting rod can be a telescopic connecting rod formed by a plurality of segments of connecting rods being sleeved together, or can be a telescopic connecting rod made of a stretchable material. The telescopic connecting rod allows the user to adjust the distance between the discharge head and the handle to facilitate charge release at different distances in the chamber. It should be noted that by adjusting the telescopic degree and the telescopic angle of the telescopic connecting rod, the distance between the discharge head 103 and the handle 102 can be adjusted, and the curved shape or bending angle of the telescopic connecting rod can also be adjusted. For example, the telescopic connecting rod can be adjusted to an S shape or an L shape.

In the device for releasing charges provided by the embodiment of the present invention, the handle 102 is connected to one end of the connecting rod 101, and the discharge head 103 is connected to the other end of the connecting rod 101. One end of the wire 104 is electrically connected to a ground point 200 outside the device for releasing charges, and the other end of the wire 104 is electrically connected to the discharge head 103. Then, the user can safely hold the handle 102 during the charge release operation, flexibly select the charged portion in the chamber and contact the discharge head 103 with the charged portion in the chamber, to allow the conductive portion to be electrically connected to the ground point to realize charge release. It can improve the flexibility and safety of the charge release operation and improve the user experience.

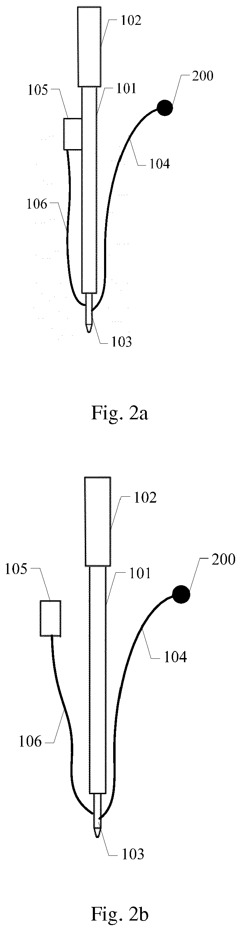

As shown in Fig. 2a, the device for releasing charges further includes a voltage display 105, which is electrically connected to the discharge head 103 via another wire 106, and the voltage display 105 is configured to display the voltage of the discharge head.

For example, the voltage display 105 can be fixed to the connecting rod 101 as shown in Fig. 2a, for example, fixed on the side wall of the connecting rod 101 by a fixing structural member such as a bolt or the like, or fixed to the side wall of the connecting rod 101 by bonding or snapping. The voltage display 105 can also be separated from the connecting rod 101 as shown in Fig. 2b.

The voltage display 105 is fixed on the side wall of the connecting rod 101 and the discharge head 103 is electrically connected to the voltage display 105, such that when the discharge head 103 is brought into contact with a position in the chamber, the user can intuitively learn about the voltage of the contact position, i.e., the charging state of the position, while performing the charge release with the device for releasing charges. Therefore, it can improve the safety of the charge release operation and improve the user experience.

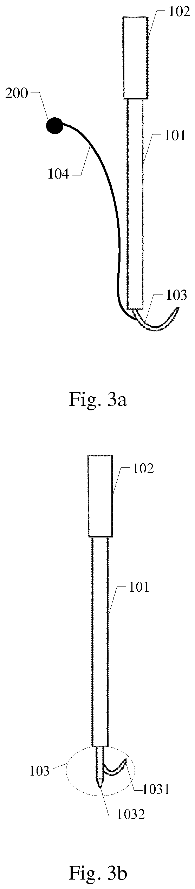

In one embodiment, as shown in Fig. 3a, the discharge head 103 is a U-shaped hook.

For example, the discharge head can be a hook of a U-shaped structure as shown in Fig. 3a. Alternatively, as shown in Fig. 3b, the discharge head 103 includes both a U-shaped hook head 1031 and a straight discharge head 1032.

When the discharge head is a hook of a U-shaped structure, it can facilitate the user to pick up foreign objects from the chamber with the device for releasing charges, thereby improving the user experience.

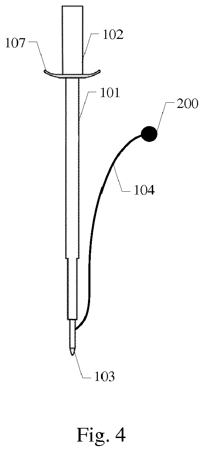

In one embodiment, as shown in Fig. 4, the device for releasing charges further includes a hand guard 107 composed of an insulating material, and the hand guard 107 is disposed between the handle 102 and the connecting rod 101.

By providing a hand guard 107 made of an insulating material between the handle 102 and the connecting rod 101, it is possible to prevent the user from accidentally causing an electric shock due to the position of the hand on the handle 102 being too close to the discharge head 103, thereby improving the safety of the charge release and improving the user experience.

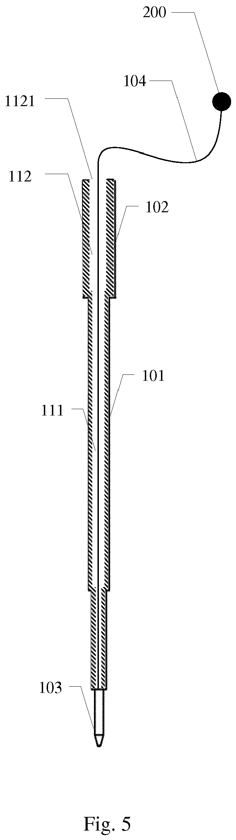

In one embodiment, as shown in Fig. 5, the connecting rod 101 includes a connecting rod inner cavity 111. The handle 102 includes a handle inner cavity 112. The wire 104 is disposed in the connecting rod inner cavity 111 and the handle inner cavity 112. One end of the wire 104 reaches out from an opening 1121 of the handle inner cavity 112, for electrical connection with the ground point 200.

By arranging the wires 104 in the connecting rod inner cavity 111 and the handle inner cavity 112, the connecting rod 101 and the handle 102 can be used to protect the wire during the usage of the device for releasing charges, thereby preventing the wire 104 from being damaged by the collision during the usage of the device for releasing charges, thereby improving the reliability of the device for releasing charges and improving the user experience.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A device for releasing charges, comprising:
a connecting rod (101);
a handle (102) connected to one end of the connecting rod (101);
a discharge head (103) connected to the other end of the connecting rod (101); and
a wire (104) having one end electrically connected to a ground point (200) and the other end electrically connected to the discharge head (103).

2. The device for releasing charges according to claim 1, further comprising a voltage display (105) electrically connected to the discharge head (103) by another wire (106), wherein the voltage display (105) is configured to display a voltage of the discharge head (103).

3. The device for releasing charges according to claim 1, wherein the connecting rod (101) is a telescopic connecting rod.

4. The device for releasing charges according to claim 1, wherein the discharge head (103) is a hook of a U-shaped structure.

5. The device for releasing charges according to claim 1, further comprising a hand guard (107) composed of an insulating material, wherein the hand guard (107) is disposed between the handle (102) and the connecting rod (101).

6. The device for releasing charges according to claim 1, wherein the connecting rod (101) comprises a connecting rod inner cavity (111), the handle (102) comprises a handle inner cavity (112), and the wire (104) is disposed in the connecting rod inner cavity (111) and in the handle inner cavity (112), one end of the wire (104) reaches out from an opening (1121) of the handle inner cavity (112) for electrical connection with the ground point (200).

7. The device for releasing charges according to claim 1, wherein a material of the discharge head (103) comprises a conductive material comprising copper and/or silver.

8. The device for releasing charges according to claim 1, wherein a material of the handle (102) and the connecting rod (101) comprises an insulating material.

9. The device for releasing charges according to claim 1, wherein a voltage display (105) is fixed to the connecting rod (101).

10. The device for releasing charges according to claim 1, wherein the discharge head (103) comprises both a U-shaped hook head (1031) and a straight discharge head (1032).
